# EUROPÄISCHE PATENTANMELDUNG

(11) **EP 0 958 790 A2**
(43) Veröffentlichungstag der Anmeldung: **24.11.1999**
(21) Anmeldenummer: 99890159.9
(22) Anmeldetag: 19.05.1999
(51) Int. Cl.: A61C 1/00, A61C 1/05, A61C 1/08

(54) **Stellvorrichtung für einen Luftantrieb, insbesonders für ein medizinisches bzw. dentales Instrument**

(30) Priorität: 20.05.1998 AT 87398
(71) Anmelder: DENTALWERK BÜRMOOS GESELLSCHAFT M.B.H., 5111 Bürmoos (AT)
(72) Erfinder: Rehrl, Gregor, 5110 Oberndorf (AT); Kardeis, Richard, 5111 Bürmoos (AT); Brugger, Wilhelm, Dipl.-Ing., Dr., 5101 Bergheim bei Salzburg (AT)
(74) Vertreter: Patentanwälte BARGER, PISO & PARTNER

(57) **Zusammenfassung**

Die Erfindung betrifft eine Stellvorrichtung für einen Gas-, insbesondere einen Luftstrom, insbesonders für ein medizinisches bzw. dentales Instrument (1), beispielsweise ein Handstück bzw. Winkelstück, das seine Energie vibratorisch abgibt und bei dem die Vibrationen durch einen Luftantrieb erzeugt werden.

Die Stellvorrichtung besteht aus einem Stellring (5), der an seiner Innenwand (11) zumindest eine Ausnehmung (9) aufweist, durch die zumindest zwei Luftleitungen (4,6) des Instrumentes mit unterschiedlichem Strömungswiderstand in Verbindung gebracht werden können, wodurch der Luftstrom eingestellt werden kann.

## Beschreibung

Die Erfindung betrifft eine Stellvorrichtung für einen Luftantrieb, insbesonders den Luftantrieb eines medizinischen bzw. dentalen Instruments, beispielsweise ein Handstück bzw. Winkelstück, das seine Energie vibratorisch abgibt und bei dem die Vibrationen durch einen Luftantrieb erzeugt werden.

Es wurden luftbetriebene Vibrationssysteme bis heute nur von zwei Unternehmen angeboten, die über entsprechende Patente verfügen. Die Instrumentenhersteller beziehen diese Systeme von den beiden Unternehmen und bauten sie bis vor einiger Zeit ausschließlich in sogenannte Scaler ein, das sind Geräte, mit denen Zahnstein entfernt wird.

Im Jahr 1992 wurde erkannt, daß es mittels derartiger vibrierender Werkzeuge mit entsprechend ausgestalteter Werkzeugoberfläche (Besatz mit Diamantsplitt, etc.) auch möglich ist, Zähne bzw. Knochen oder andere harte Materialien abzutragen. Dies wurde im DEG 92 17 943.6 U1 geoffenbart.

Eine Weiterentwicklung dieser Idee ist aus der W096/14024A bekannt: Es wird dabei ein Formwerkzeug auf einen solchen vorbekannten Scaler aufgesteckt, das in einen Zahn eine Negativform des Werkzeuges schafft. Der Abtrag des Materials erfolgt durch die Schwingungen des Formwerkzeuges und ist somit im wesentlichen um die Schwingungsamplitude größer als dieses. Da die Schwingungsamplitude extrem klein ist, entstehen sehr formgenaue Ausnehmungen, die auch durch scharfe Ecken begrenzt sein können und vom runden Querschnitt erheblich abweichen.

Derartige Ausnehmungen im Zahn benötigt man zur Befestigung von vorkonfektionierten also formstandardisierten Zahnersatzmaterialien, beispielsweise Inlays. Die Ersatzmaterialien weisen an passender Stelle genau ausgebildete und geformte Fortsätze auf, die in die so geschaffenen Ausnehmungen passen und in diesen festgeklebt bzw. einzementiert werden.

Andere Anwendungen betreffen die Wurzelkanalbehandlung und die Reinigung der Zahnoberfläche mit schwingenden Bürsten. Bei derartigen Tätigkeiten können ebenfalls Instrumente verwendet werden, die über einen Luftantrieb verfügen. Selbverständlich bedürfen auch Luftströme für andere Apparate und Geräte einer Regelung, üblicherweise in großen Grenzen und doch feinfühlig.

Es hat sich nun herausgestellt, daß die Abtragleistungen und die Schwingungsamplituden bei ein und demselben Instrument in Abhängigkeit vom aufgesetzten Werkzeug stark unterschiedlich sind. Die Anmelderin hat herausgefunden, daß dies darauf zurückzuführen ist, daß das Schwingungsverhalten des Werkzeuges, des Werkzeugschaftes und des Luft-Vibrationsantriebes ein kompliziertes Schwingungssystem bildet und daß die maximale Abtragleistung und Maßgenauigkeit der gebildeten Ausnehmung bei verschiedenen Werkzeugen bzw. Anwendungen bei jeweils unterschiedlichen Luftströmen zum Luft-Vibrationsantrieb liegt.

Die Erfindung betrifft somit eine Stellvorrichtung für einen Luft-Vibrationsantrieb in einem dentalen oder medizinischen Instrument der eingangs genannten Art.

Eine solche Stellvorrichtung an sich ist aus der Praxis bekannt und besteht aus einer am Handstück angeordneten Stellhülse, bei deren Verdrehen ein Teflonklötzchen die Treibluftleitung in unterschiedlichem Ausmaß verlegt. Diese Regelung ist extrem ungenau und nichtlinear.

Eine spätere Stellvorrichtung des gleichen Herstellers, deren Aufbau aber unbekannt ist, weist eine Stellhülse auf, die bezüglich der Handstückmittelachse um etwa vier ganze Umdrehungen gedreht werden kann, wenn sie zwischen der Position "völlig geschlossen" und der Position "völlig geöffnet" bewegt wird. Diese Stellvorrichtung ist für die vorliegenden Zwecke völlig unbrauchbar, da der benutzende Arzt nicht feststellen kann, in welcher Lage sich die Stellvorrichtung befindet und dies auch nicht im Leerlauf, in der Luft, feststellen kann, da das Schwingungsverhalten des oben genannten schwingfähigen Systems im unbelasteten Zustand vom Verhalten im belasteten Zustand stark abweicht bzw. abweichen kann und auch dem geübten Benutzer keinen Hinweis auf die Einstellung der Stellvorrichtung liefert.

Darüberhinaus ist die vorbekannte Vorrichtung trotz des großen Stellweges weit davon entfernt, ein auch nur annähernd lineares Verhalten zu zeigen, so daß es Stellbereiche gibt, in denen bereits eine geringe Verdrehung der Stellhülse eine starke Änderung des Luftstroms bewirken, während in anderen Bereichen auch bei einer starken Verdrehung der Stellhülse nur eine geringe Änderung der durchströmenden Luft erreicht wird.

Die Erfindung bezweckt somit eine Stellvorrichtung zu schaffen, die die Nachteile der vorbekannten Stellvorrichtung nicht aufweist und die in der Lage ist, dem Benutzer vor Inbetriebnahme des Instrumentes eindeutig und einfach anzuzeigen, in welcher Stellung die Stellvorrichtung sich befindet.

Erfindungsgemäß wird ein Luftstrom dadurch geregelt, daß eine Luftzuleitung und eine Luftableitung im Abstand voneinander an einer Oberfläche münden und daß eine Gegenfläche beweglich zur Oberfläche vorgesehen ist, die in Abhängigkeit von ihrer Lage zur Oberfläche einen Strömungsweg mit definiertem Strömungswiderstand zwischen der Luftzuleitung und der Luftableitung bildet.

Erfindungsgemäß erreicht man diese Ziele bei einer Vorrichtung der eingangs genannten Art speziell dadurch, daß die Stellvorrichtung aus einem am Handstück drehbar angeordneten Stellring besteht, der um weniger als 360° um die Handstückachse drehbar ist, daß der Stellring an seiner im wesentlichen kreiszylinderförmigen inneren Mantelfläche eine Ausnehmung aufweist, die in Umfangsrichtung kontinuierlich sich ändernden Querschnitt aufweist und daß im Handstück zumindest eine Antriebsluftzuleitung im wesentlichen radial nach außen verläuft und im Bereich der inneren Mantelfläche des Stellringes endet und daß eine Antriebsluftweiterleitung im Handstück im wesentlichen radial nach innen, von der inneren Mantelfläche des Stellringes ausgehend, zum luftgetriebenen Vibrationsantrieb verläuft, wobei die Ausnehmung im Stellring, der einen und/oder der anderen Mündung je nach Winkellage des Stellringes bezüglich des Handstückes mehr oder weniger gegenübersteht.

Durch diese Maßnahme erreicht man es, daß der Stellring aufgrund seiner Winkellage eine eindeutige Indikation für die Einstellung der Stellvorrichtung gibt, was durch entsprechende Markierungen am Stellring und am Handstückkörper noch verdeutlicht werden kann.

Es können in einer Ausgestaltung der Erfindung mehrere Markierungen vorgesehen sein, durch die für den Benutzer Angaben über die jeweils beste Einstellung für eine entsprechend vorbestimmte Arbeitsweise gegeben werden.

Es ist auch möglich, besonders wichtige Stellungen durch einen an sich bekannten Rastmechanismus hörbar und/oder spürbar einrasten zu lassen, um den Benutzer die richtige Einstellung leichter finden zu lassen.

Die Erfindung wird im folgenden an Hand der Zeichnung näher erläutert. Dabei zeigt
die Fig. 1 ein erfindungsgemäßes Handstück im Axialschnitt und
die Fig. 2 einen erfindungsgemäßen Stellring, ebenfalls im Axialschnitt und
die Figa. 3 und 4 Varianten des Stellringes gemäß der Fig. 2.

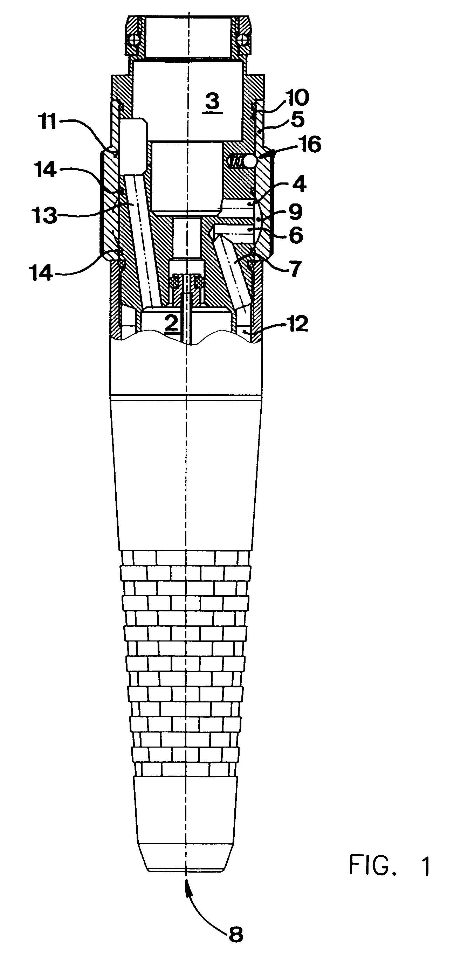

Wie aus Fig. 1 ersichtlich ist, weist ein erfindungsgemäßes Handstück 1 einen bekannten Luft-Vibrationsantrieb 2 auf, der eine Werkzeugaufnahme 8 in hochfrequente Schwingungen versetzt. Die Luft wird dem Handstück 1 über einen üblichen Versorgungsschlauch (nicht dargestellt) und eine - ebenfalls nicht dargestellte - Kupplung, die in die Ausnehmung 3 des Handstückes 1 einsteckbar ist, zugeführt.

Von dort gelangt die Antriebsluft über eine im wesentlichen radial verlaufende Bohrung 4, die in der äußeren Mantelfäche 10 des Körpers des Handstückes 1 mündet, in einen Bereich, dem die innere Mantelfläche 11 des Stellringes 5 gegenübersteht.

Im Abstand von der Mündung der Luftzufuhrleitung 4 verläuft die Luftweiterleitung 6 im wesentlichen radial, ausgehend von der Mantelfläche 10 zu einer weiterführenden Luftleitung 7 durch die die Antriebsluft schließlich in einen Ringraum 12 gelangt, der den Luft-Vibrationsantrieb 2 umgibt. Von diesem Ringraum 12 führen düsenartige Öffnungen ins Innere des Antriebs und treiben ihn an. Die Abluft gelangt durch eine Abluftleitung 13 wieder in die Kupplungsaufnahme 3 und wird durch den Versorgungsschlauch abgeführt.

Bei eingeschobener Kupplung wird die Aufnahme 3 durch Dichtungen, in den meisten Fällen O-Ringe, am Kupplungszapfen in einzelne Bereiche unterteilt, so daß die Antriebsluft und die Rückluft voneinander getrennt gehalten werden. Auf ähnliche Weise wird der Stellring 5 gegenüber dem Körper des Handstückes 1 durch O-Ringdichtungen 14 abgedichtet.

In Fig. 1 ist weiters eine an sich bekannte Kugel-Rastvorrichtung 16 ersichtlich, durch die besonders oft benötigte oder genau einzuhaltende Stellpositionen einfach und genau erreichbar und gegen ungewolltes Verdrehen gesichert sind. Diese Rastvorrichtung besteht aus einer federbelasteten Kugel im Instrumentenkörper 15, die in eine oder alternierend in verschiedene kalottenförmige Ausnehmungen im Stellring 5 gelangt und so die Lage der beiden Teile zueinander kraftschlüssig fixiert.

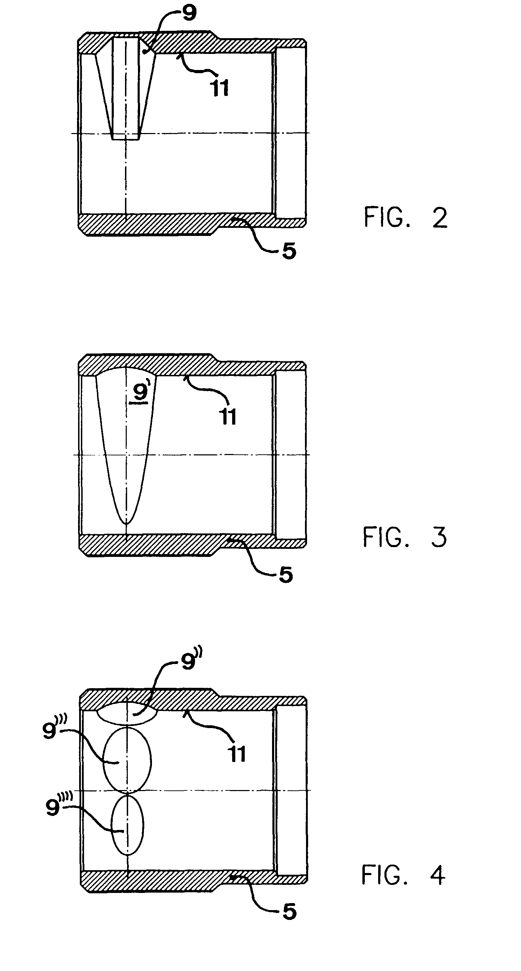

In Fig. 2 ist der Stellring 5 in vergrößertem Maßstab dargestellt. Dabei erkennt man deutlich die Ausnehmung 9 auf seiner ansonsten kreiszylindrischen Mantelfläche 11. Die Mündungen der Luftleitungen 4 und 6 sind so angeordnet, daß sie bei der der völligen Öffnung entsprechenden Winkellage des Drehringes 5 mit ihrer gesamten Stirnfläche im Bereich der Ausnehmung 9 liegen und so den maximalen Durchfluß erlauben.

Mit fortschreitender Verdrehung des Ringes 5 aus dieser Lage zur geschlossenen Lage gelangen kontinuierlich fortschreitend größere und größere Anteile der Stirnflächen der Luftleitungen 4 und 6 aus dem Bereich der Ausnehmung 9 heraus und stehen diametral der kreiszylinderförmigen Mantelfläche 11 des Stellringes 5 gegenüber, bis zumindest eine, bevorzugt beide Stirnflächen der Luftleitungen 4, 6 der kreiszylinderförmigen Mantelfläche 11 gegenüberstehen und, besonders bevorzugt, Abstand zur Ausnehmung 9 aufweisen.

Es weist nun diese innere Stirnfläche 11 von der entsprechenden äußeren Stirnfläche 10 des Körpers 15 des Handstückes 1 notgedrungen einen minimalen Abstand auf, der zur leichteren Verdrehbarkeit und zur Berücksichtigung der Herstellungstoleranzen notwendig ist, doch ist dieser Abstand so klein, daß er keine merkliche Luftströmung zuläßt, sodaß schließlich, wenn der Stellring 5 in seine der völlig geschlossenen Lage entsprechende Winkelstellung gelangt, die Stirnflächen der beiden Öffnungen 4 und 6 zur Gänze der kreiszylinderförmigen inneren Mantelfläche 11 gegenüberstehen und voneinander strömungstechnisch getrennt sind.

Aus Fig. 3 ist ein Stellring 5 ersichtlich, dessen Ausnehmung 9' eine ausgerundete Form aufweist, während die aus Fig. 2 ersichtliche Ausnehmung 9 einerseits linear begrenzt ist, anderseits eine linear mit dem Umfang zunehmende Tiefe aufweist.

Die Fig. 4 zeigt eine Variante, bei der eine Mehrzahl vorgegebener Stellungen vorgesehen sind, hier ist die Kombination mit einer Kugelrast besonders empfehlenswert. Die einzelnen Ausnehmungen 9", 9"' und 9"" weisen jeweils vorgegebenen Strömungswiderstand auf und entsprechen so diskreten Stellpositionen. Damit wird zwar auf eine kontinuierliche Einstellung verzichtet, doch dafür die Möglichkeit besonders genauer Einzeleinstellungen erreicht.

Die Form der einzelnen Ausnehmungen 9"-9"" kann selbstverständlich anders ausgebildet sein, insbesondere können im wesentlichen lineare Nuten verwendet werden, die leicht durch Fräsen herstellbar sind. In diesen Fällen kann die Stellwirkung nicht nur durch die unterschiedliche Überdeckung der Stirnflächen der Luftleitungen 4, 6 erreicht werden, sondern auch (oder ausschließlich) durch den Strömungswiderstand der Ausnehmungen.

Prinzipiell besteht die erfindungsgemäße Stellvorrichtung somit aus einem Stellring (5), der an seiner Innenwand (11) zumindest eine Ausnehmung (9) aufweist, durch die zwei Luftleitungen (4,6) des Instrumentes mit unterschiedlichem Strömungswiderstand in Verbindung gebracht werden können, wodurch der Luftstrom auf passende Werte eingestellt werden kann.

Die Erfindung kann überall eingesetzt werden, wo ein Gasstrom eingestellt werden soll und dies einfach und leicht erkennbar geschehen muß. Besonders eignet sich diese Vorrichtung für Anwendungsfälle, bei denen die Gasquelle konstante Parameter (Druck, Temperatur) aufweist, da dann die vorgesehenen Arbeitspunkte immer gleichen Gasströmen entsprechen.

In Kenntnis der Erfindung ist es dem Fachmann auf dem Gebiet der Strömungstechnik ein Leichtes, Varianten und Ausgestaltungen der Erfindung zu finden, ohne aus dem Bereich ihrer Grundidee, wie sie in den Ansprüchen definiert ist, zu kommen. So ist es beispielsweise möglich, den unvermeidlichen Spalt zwischen Oberfläche und Gegenfläche durch Dichtungen, beispielsweise O-Ringe, abzudichten, die Mündungen der Gasleitungen in die Oberfläche verschieden auszugestalten oder die Leitung(en) in einer Mehrzahl von Teilmündungen münden zu lassen.

Die Oberfläche und die Gegenfläche können die unterschiedlichsten Formen aufweisen und auf unterschiedlichste Art und Weise zueinander bewegt werden. Bevorzugt werden eine Drehbewegung, wenn die Oberfläche kreiszylindrisch ausgebildet ist, oder eine translatorische Bewegung entlang einer Erzeugenden der Oberfläche. Es ist auch eine kombinierte Dreh-Hebe-Bewegung der Gegenfläche denkbar, wenn dies auch aus fertigungstechnischen Gründen unrentabel erscheint.

## Patentansprüche

1. Stellvorrichtung für einen in einer Gasleitung strömenden Gasstrom, insbesondere einen Luftstrom, dadurch gekennzeichnet, daß die Gasleitung zumindest in eine Gaszuleitung und eine Gasableitung geteilt ist, daß die Gaszuleitung und die Gasableitung im Abstand voneinander an einer Oberfläche münden und daß eine Gegenfläche beweglich zur Oberfläche vorgesehen ist, die in Abhängigkeit von ihrer Lage zur Oberfläche einen Strömungsweg mit definiertem Strömungswiderstand zwischen der Gaszuleitung und der Gasableitung bildet.

2. Stellvorrichtung nach Anspruch 1, insbesonders für ein medizinisches bzw. dentales Instrument, z.Bsp. ein Handstück (1) bzw. Winkelstück, das seine Energie vibratorisch abgibt und bei dem die Vibrationen durch einen Luftantrieb (2) erzeugt werden, dadurch gekennzeichnet, daß die Stellvorrichtung aus einem am Handstück drehbar angeordneten Stellring (5) besteht, dessen Stellbereich kleiner als 360° ist, daß der Stellring (5) an seiner im wesentlichen kreiszylinderförmigen inneren Mantelfläche (11) zumindest eine im wesentlichen in Umfangsrichtung verlaufende Ausnehmung (9) aufweist, die in Umfangsrichtung kontinuierlich sich ändernden Querschnitt aufweist und daß im Handstück (1) zumindest eine Antriebsluftzuleitung (4) im wesentlichen radial nach außen verläuft und im Bereich der äußeren Mantelfläche (10) mündet und daß eine Antriebsluftweiterleitung (6) im Handstück von dessen äußerer Mantelfläche (10) ausgehend im wesentlichen radial nach innen, zum Luftantrieb (2) verläuft, wobei je nach Winkellage des Stellringes (5) dessen Ausnehmung (9) der einen und/oder der anderen Mündung mehr oder weniger gegenübersteht.

3. Stellvorrichtung nach Anspruch 1, insbesonders für ein medizinisches bzw. dentales Instrument, z.Bsp. ein Handstück (1) bzw. Winkelstück, das seine Energie vibratorisch abgibt und bei dem die Vibrationen durch einen Luftantrieb (2) erzeugt werden, dadurch gekennzeichnet, daß die Stellvorrichtung aus einem am Handstück drehbar angeordneten Stellring (5) besteht, dessen Stellbereich kleiner als 360° ist, daß der Stellring (5) an seiner im wesentlichen kreiszylinderförmigen inneren Mantelfläche (11) zumindest zwei voneinander getrennte Ausnehmungen (9", 9"', 9"") aufweist, daß im Handstück (1) zumindest eine Antriebsluftzuleitung (4) im wesentlichen radial nach außen verläuft und im Bereich der äußeren Mantelfläche (10) mündet und daß zumindest eine Antriebsluftweiterleitung (6) im Handstück von dessen äußerer Mantelfläche (10) ausgehend im wesentlichen radial nach innen, zum Luftantrieb (2) verläuft, wobei je nach Winkellage des Stellringes (5) keine oder eine der Ausnehmungen (9",9'",9"") beiden Mündungen zumindest teilweise gegenübersteht.

4. Stellvorrichtung nach einem der vorangehenden Ansprüche, dadurch gekennzeichnet, daß eine an sich bekannte Positioniervorrichtung, beispielsweise eine Kugelrast (16), zumindest eine der Arbeitspositionen des Stellringes (5) bezüglich des Instrumentes (1) kraftschlüssig fixiert.
